# EUROPÄISCHE PATENTSCHRIFT

(11) **EP 3 999 378 B1**
(45) Veröffentlichungstag und Bekanntmachung des Hinweises auf die Patenterteilung: **06.11.2024**
(21) Anmeldenummer: 20739292.9
(22) Anmeldetag: 01.07.2020
(51) Int. Cl.: B60P 1/52, B60P 3/42, B62D 24/00, B62D 63/02

(54) **FAHRZEUGKONFIGURATOR**
VEHICLE CONFIGURATOR
CONFIGURATEUR DE VÉHICULE

(30) Priorität: 16.07.2019 CH 9162019
(43) Veröffentlichungstag der Anmeldung: 25.05.2022
(73) Patentinhaber: Creative Innovations AG, 8126 Zumikon (CH)
(72) Erfinder: KÄGI, Peter, 8634 Hombrechtikon (CH); RINDERKNECHT, Frank, M., 8700 Küsnacht (CH)
(74) Vertreter: Stellbrink & Partner Patentanwälte mbB
(86) Internationale Anmeldenummer: PCT/EP2020/068584
(87) Internationale Veröffentlichungsnummer: WO 2021/008874

(56) Entgegenhaltungen:
- DE-A1- 102017 122 704
- FR-A- 1 510 022
- JP-A- 2011 235 689
- KR-A- 20170 136 529
- US-A- 2 822 055
- US-A1- 2018 133 074

## Beschreibung

### Gebiet der Erfindung

Die Erfindung bezieht sich auf ein einen Fahrzeugkonfigurator, einen Transportaufbau für den Fahrzeugkonfigurator, ein Fahrgestell und ein Verfahren zum Verschieben eines Transportaufbaus in einem Fahrzeugkonfigurator.

### Hintergrund

Fahrgestelle werden heutzutage mit verfallszeitsensitiven elektronischen Komponenten ausgestattet. Das heisst, dass zum Beispiel ein eingebautes Fahrzeug-Navigationssystem oder Infotainmentsystem nach kurzer Zeit bereits wieder von neuen Innovationen überholt wird und gegenüber diesen technologisch veraltet ist. Ein Hardware-Update dieser Komponenten ist ökonomisch betrachtet oft wenig sinnvoll, was dazu führt, dass das ganze Fahrzeug nach kurzer Zeit durch ein Neueres ersetzt wird.

Damit die kurze Lebensdauer eines Fahrzeugs optimal genutzt werden kann, sollte das Fahrzeug möglichst oft eingesetzt werden. Eine hohe Auslastung eines Fahrzeugs kann insbesondere durch modulare Fahrzeugsysteme angestrebt werden, wie sie zum Beispiel in US 2018/0050626 A1 beschrieben sind. Dabei kann ein Fahrwerk eines Fahrzeugs modular mit unterschiedlichen Fahrgast- und/oder Warentransportzellen verbunden werden, so dass unterschiedliche Nutzungsmöglichkeiten entstehen.

Allerdings haben diese Systeme oft den Nachteil, dass ein Austausch der Fahrgast- und/oder Warentransportzellen nur mit viel Aufwand möglich ist.

Andererseits benötigt die weltweit stark ansteigende Nachfrage von Auslieferung von Online- Bestellungen neue, innovative und effizientere Lösungsansätze.

KR 2017/0136529 A offenbart einen Fahrzeugkonfigurator umfassend ein Fahrgestell, mindestens einen Transportaufbau und Transfermittel. Die Transfermittel sind im Wesentlichen in einer Verschiebungsebene angeordnet. Der Fahrzeugkonfigurator der KR 2017/0136529 A ist derart ausgebildet, dass der Transportaufbau mit den Transfermitteln in der Verschiebungsebene verschiebbar ist zum Beladen oder Entladen des Transportaufbaus von dem Fahrgestell.

DE 10 2017 122704 A1 offenbart einen Fahrzeugkonfigurator, ein Fahrgestell und ein Verfahren ähnlich dem Oberbegriff der Ansprüche 1, 11 und 12.

Durch modulare Fahrzeugsysteme können solche Lösungsansätze umgesetzt werden.

### Darstellung der Erfindung

Der vorliegenden Erfindung liegt daher die Aufgabe zugrunde, ein modulares Fahrsystem bereitzustellen, welches gegenüber den oben erwähnten bekannten Fahrsystemen vorteilhaft ist.

Ein erster Aspekt der Erfindung bezieht sich dazu auf einen Fahrzeugkonfigurator, welcher ein Fahrgestell, einen Transportaufbau und ein oder mehrere Transfermittel umfasst. Das eine oder die mehreren Transfermittel sind dabei im Wesentlichen in einer Verschiebungsebene angeordnet, beziehungsweise bilden eine Verschiebungsebene. Die Verschiebungsebene ist insbesondere eine virtuelle Ebene, in welcher sich der Transportaufbau versschieben lässt.

Im Wesentlichen heisst insbesondere, dass auch leichte Abweichungen der Anordnung des einen oder mehreren Transfermittel in einer Ebene berücksichtigt werden. Das eine oder mehrere Transfermittel bildet insbesondere mit seinen Auflagepunkten diese Verschiebungsebene.

Der Fahrzeugkonfigurator ist derart ausgebildet, dass der Transportaufbau mit dem einen oder der mehreren Transfermittel in der Verschiebungsebene verschieb bar ist, zum Beladen oder Entladen des Transportaufbaus von dem Fahrgestell.

Der Fahrzeugkonfigurator ist als Konfigurator für Fahrzeuge im öffentlichen Verkehr geeignet, insbesondere für den Fahrgast- oder Warentransport, insbesondere für Fahrzeuge, welche autonom im öffentlichen Verkehr unterwegs sind.

Das Fahrzeug ist insbesondere ein verkehrstaugliches Fahrzeug, insbesondere ein autonomes verkehrstaugliches Fahrzeug.

In einer weiteren Ausführungsform kann der Fahrzeugkonfigurator eine Station umfassen, wobei der Fahrzeugkonfigurator derart ausgebildet ist, dass der Transportaufbau zwischen dem Fahrgestell und der Station verschiebbar ist. Vorteilhafterweise ist der Transportaufbau zwischen dem Fahrgestell und der Station im Wesentlichen in der Verschiebungsebene verschiebbar, in welcher die Transfermittel im Wesentlichen angeordnet sind.

In einer vorteilhaften Ausführungsform kann die Station fest montiert sein oder kann beweglich sein. Fest montiert heisst, die Station ist an einer Stelle fest verankert. Verschiebbar heisst, die Station kann mit wenigen Mitteln von einem Ort zum anderen verschoben werden, zum Beispiel weil sie Rollen oder Räder hat oder einfach von einem Ort zum anderen transportiert, gestossen oder bewegt werden kann.

Insbesondere kann der Fahrzeugkonfigurator derart ausgebildet sein, dass das Fahrgestell eine Auflagefläche zum Auflegen des Transportaufbaus hat.

Insbesondere könnte der Fahrzeugkonfigurator derart ausgebildet sein, dass eine Auflagefläche des Fahrgestells und eine Auflagefläche der Station im Wesentlichen in einer Ebene ausgerichtet sind, so dass der Transportaufbau zwischen diesen Auflageflächen verschoben werden könnte.

Die Auflagefläche des Fahrgestells und die Auflagefläche der Station sind dabei vorzugsweise so ausgerichtet, dass sie mehr oder weniger in einer Ebene liegen.

Dabei können die beiden Auflageflächen auch in parallelen Ebenen liegen, welche senkrecht zur Erstreckung der Ebenen einen Abstand a von ca. 1cm ≤ a ≤ 5cm oder ca. 1cm ≤ a ≤ 20 cm Abstand zueinander haben, solange der Transportaufbau noch in mindestens eine Richtung, also zum Beispiel von der Auflagefläche der Station auf die Auflagefläche des Fahrgestells verschiebbar ist.

In einer weiteren Ausführungsform kann der Fahrzeugkonfigurator ein weiteres Fahrgestell umfassen, wobei der Fahrzeugkonfigurator derart ausgebildet ist, dass der Transportaufbau zwischen dem Fahrgestell und dem weiteren Fahrgestell verschiebbar ist.

Vorteilhafterweise ist die Richtung der Verschiebung des Transportaufbaus lateral zur Längsachse des Fahrgestells.

In Bezug auf ein kartesisches Koordinatensystem bedeutet eine Verschiebung in lateraler Richtung zur Längsachse des Fahrgestells insbesondere, dass die Richtung der Verschiebung im Wesentlichen senkrecht (in X-Richtung) zur einen Längsrichtung des Fahrgestells (Y-Richtung) und senkrecht zu einer Höhe (Z-Richtung) des Fahrgestells stattfindet. Im Wesentlichen in X-Richtung kann dabei bedeuten, dass auch eine Abweichung der Verschiebung von ± 20° senkrecht zur Y-Richtung oder Z-Richtung eingeschlossen ist.

In einer weiteren Ausführungsform kann die Verschiebung in Richtung der Längsachse des Fahrgestells stattfinden.

In einer Ausführungsform mit zwei Transportaufbauten kann insbesondere ein erster Transportaufbau lateral zur Längsachse des Fahrgestells verschoben werden und ein zweiter Transportaufbau in Richtung der Längsachse des Fahrgestells.

Insbesondere ist der Transportaufbau nach dem Verschieben bereits in seiner Endposition. Er kann also alleine durch eine Parallelverschiebung auf seine Endposition gebracht werden und muss nicht rotiert werden.

Dass der Transportaufbau verschiebbar ist bedeutet insbesondere, dass dies möglich ist, wenn das Fahrgestell derart neben oder nahe der Station steht, dass das eine oder die mehreren Transfermittel den Transportaufbau von Station zu Fahrgestell oder umgekehrt verschieben können. Da der Transportaufbau vorzugsweise eine relativ steife Konstruktion ist, ist auch ein Verschieben über einen gewissen Abstand zwischen Station und Fahrgestell möglich.

In einer weiteren Ausführungsform des Fahrzeugkonfigurators haben das Fahrgestell und/oder das weitere Fahrgestell und/oder die Station jeweils eine Aufnahme, welche jeweils passgenau ist für den Transportaufbau. Passgenau heisst, dass die Aufnahme als negative Form eines Teils der Form des Transportaufbaus ausgebildet ist, so dass insbesondere alle Unterseiten, mit welchen der Transportaufbau mit der Station und/oder dem Fahrgestell und/oder dem weiteren Fahrgestell in Kontakt ist, mit der Aufnahme der Station und/oder des Fahrgestells in Kontakt sind. Die passgenaue Aufnahme dient insbesondere dazu, dass der Transportaufbau besser auf der Station oder dem Fahrgestell aufliegt. Insbesondere kann die Aufnahme auch Befestigungsmittel des Transportaufbaus umfassen. Diese Befestigungsmittel können zum Beispiel als Bolzen, Haken, oder Gurte ausgestaltet sein, zum lösbaren Befestigen des Transportaufbaus an Station oder Fahrgestell.

In einer weiteren Ausführungsform sind das eine oder die mehreren Transfermittel als Komponenten des Fahrgestells, als Komponenten des weiteren Fahrgestells und/oder als Komponenten des Transportaufbaus und/oder als Komponenten der Station ausgebildet. Insbesondere können also das eine oder die mehreren Transfermittel nur an der Station, oder nur an dem Fahrgestell oder nur an dem Transportaufbau vorkommen. Ausserdem wären auch Kombinationen möglich, so dass das eine oder die mehreren Transfermittel zum Beispiel an der Station und am Fahrgestell vorkommen, wobei der Transportaufbau keine Transfermittel hat. Weiter wäre es möglich, dass das eine oder die mehreren Transfermittel nur am Transportaufbau vorkommen und nicht an der Station oder Fahrgestell. Oder eben dass das eine oder die mehreren Transfermittel an dem Transportaufbau und der Station oder dem Fahrgestell vorkommen.

In einer weiteren Ausführungsform können die Transfermittel unten am Transportaufbau oder oben am Transportaufbau angeordnet sein. In einer weiteren Ausführungsform können die Transfermittel am Fahrgestell angeordnet sein, so dass der Transportaufbau nach Beladen des Fahrgestells auf oder unter den Transfermitteln zu liegen kommt.

In einer weiteren Ausführungsform sind das eine oder die mehreren Transfermittel vorteilhafterweise innerhalb einer Auflagefläche der Station und/oder innerhalb einer Auflagefläche des Fahrgestells aufgebracht, so dass der Transportaufbau direkt darauf zu liegen kommt und die Transfermittel direkt auf den Transportaufbau wirken um diesen zu verschieben.

Insbesondere können das eine oder die mehreren Transfermittel den Transportaufbau nur dann von der Station zum Fahrgestell bewegen, wenn Fahrgestell und Station innerhalb der jeweiligen Wirkweite des einen oder mehreren Transfermittels der Station und/oder des Fahrgestells befinden. Das heisst, Fahrgestell und Station sollten sich in einem gewissen Mindestabstand, also innerhalb einer Wirkweite des einen oder der mehreren Transfermittel befinden, damit der Transportaufbau verschoben werden kann. Die Wirkweite, also in welcher Distanz der Transportaufbau über das Fahrgestell hinaus verschiebbar ist hängt einerseits von dem einen oder der mehreren Transfermittel ab und andererseits von Form und Gewicht, beziehungsweise Lage des Schwerpunkts, des Transportaufbaus.

Vorteilhafterweise das eine oder die mehreren Transfermittel zumindest teilweise als Lager mit Rädern, Rollen oder Kugeln, als Förderband, als Transportband, als Kettentransportsystem oder als gleitende Oberfläche oder einer Kombination davon ausgebildet. Dabei sind die Lager oder das Förderband insbesondere so ausgebildet, dass deren Transportrichtung lateral zur Längsachse des Fahrgestells ausgerichtet ist. Die gleitende Ebene hat insbesondere eine Beschichtung aus einem Material, welche einen kleinen Reibungskoeffizient mit der darauf gleitenden Oberfläche hat. Die gleitende Ebene, zum Beispiel die Auflagefläche der Station, kann zum Beispiel mit Teflon beschichtet sein, wobei eine Unterseite des Transportaufbaus derart ausgebildet ist, dass diese auf der Beschichtung gut gleitet.

In einer weiteren Ausführungsform können die Transfermittel auch als sogenannte "Omniwheels", Allseitenräder, ausgestaltet sein.

In einer weiteren Ausführungsform könnte auch die Station auf Rädern, insbesondere auf Allseitenrädern gelagert werden.

Das eine oder die mehreren Transfermittel können dabei aktiv oder passiv sein, das heisst, sie können entweder aktiv betrieben werden, also mit einem Antrieb ausgestattet sein, oder durch ein Verschieben des Transportaufbaus durch einen Benutzer angetrieben werden.

In einer weiteren Ausführungsform können die Station und/oder das Fahrgestell und/oder das weitere Fahrgestell höhenverstellbar sein. Somit kann zum Beispiel die Höhe einer möglichen Auflagefläche der Station und/oder eine Auflagefläche des Fahrgestells oder des weiteren Fahrgestells in Z-Richtung verstellt werden. Diese Verstellbarkeit dient dazu, insbesondere die möglichen Auflageflächen auf im Wesentlichen eine Ebene, der Verschiebungsebene zu bringen, damit der Transportaufbau verschoben werden kann.

In einer weiteren Ausführungsform des Fahrzeugkonfigurators umfasst das Fahrgestell eine Führungsvorrichtung. Damit kann der Transportaufbau während dem Verschieben geführt werden. Insbesondere ist diese Führungsvorrichtung als Schiene oder als Schienenpaar ausgebildet. Vorzugsweise ist die Führungsvorrichtung als Schienenpaar ausgebildet, das auf der Station in Richtung des Fahrgestells trichterförmig ausgebildet ist. Das heisst, dass ein Abstand zwischen den Schienen des Schienenpaars in Richtung des Fahrgestells kleiner wird, aber genug gross bleibt, dass der Transportaufbau zwischen den Schienen durchpasst. So eine Führungsvorrichtung erleichtert das Verschieben des Transportaufbaus, da sie den Transportaufbau an die richtige Stelle zum Beladen auf das Fahrgestell leitet.

In einer weiteren vorteilhaften Ausführungsform des Fahrzeugkonfigurators ist eine Brücke zwischen Station und Fahrgestell das Beladen und Entladen des Fahrgestells angeordnet, welche das Beladen und Entladen erleichtert. Insbesondere kann die Brücke kleine Höhenunterschiede zwischen Station und Fahrgestell überbrücken, zum einfacheren Beladen und Entladen des Transportaufbaus.

Eine weitere vorteilhaften Ausführungsform des Fahrzeugkonfigurators umfasst eine Verbindung zwischen dem Fahrgestell und dem Transportaufbau, zum Austauschen von Daten und/oder zur Stromversorgung. Die Verbindung kann insbesondere eine Kabelverbindung oder eine drahtlose, zum Beispiel induktive, Verbindung sein.

Eine weitere Ausführungsform des Fahrzeugkonfigurators umfasst ein Set von Transportaufbauten. Vorzugsweise umfasst das Set mindestens einen Transportaufbau zum Personentransport und einen Transportaufbau zum Gütertransport. Im Weiteren kann das Set mehrere Transportaufbauten zum Personen- und Warentransport umfassen, wobei eine unterschiedliche Anzahl Personen damit transportiert werden kann. Ausserdem kann das Set auch verschiedene Aufbauten zum Gütertransport umfassen, welche für unterschiedliche Güter ausgelegt sind, zum Beispiel Aufbauten zum Transport von Paketen.

In einer weiteren vorteilhaften Ausführungsform kann der Transportaufbau in sich modular aus einem oder mehreren Transportmodulen aufgebaut sein. Insbesondere können die einzelnen Transportmodule des Transportaufbaus verbunden oder teilweise verbunden sein. Insbesondere können die einzelnen Transportmodule des Transportaufbaus einzeln vom Transportaufbau be- oder entladen werden. Eine weitere vorteilhafte Ausführungsform des Fahrzeugkonfigurators kann zwei, drei, vier, fünf oder sechs Transportaufbauten umfassen.

Insbesondere kann ein zweiter, dritter, vierter, fünfter oder sechster Transportaufbau als Transportwagen ausgestaltet sein. Im Weiteren kann ein zweiter, dritter, vierter, fünfter oder sechster Transportaufbau auch zum Personen- oder Gütertransport ausgestaltet sein.

In einer weiteren Ausführungsform kann der Transportaufbau mittels mindestens eines Befestigungselements auf dem Fahrgestell befestigt werden. Vorzugsweise wird der Transportaufbau mit mindestens drei mechanischen Befestigungselementen befestigt. Vorzugsweise ist das mindestens eine Befestigungsmittel derart ausgestaltet, dass es das Verschieben des Transportaufbaus nicht behindert, also zum Beispiel versenkbar, zum Beispiel in einer Auflagefläche des Transportaufbaus versenkbar, ist.

Insbesondere kann das Befestigungsmittel so ausgestaltet sein, dass in x, y, und z-Richtung verschiebbar, abdrehbar oder abkippbar ist.

Ein zweiter Aspekt der Erfindung bezieht sich auf einen Transportaufbau für den Fahrzeugkonfigurator gemäss dem ersten Aspekt der Erfindung.

Ein dritter Aspekt der Erfindung bezieht sich auf ein Fahrgestell umfassend ein oder mehrere Transfermittel, welche im Wesentlichen in einer Verschiebungsebene angeordnet sind, beziehungsweise eine Verschiebungsebene bilden. Das Fahrgestell ist derart ausgebildet, dass ein Transportaufbau mit dem einen oder den mehreren Transfermitteln in der Verschiebungsebene verschiebbar ist, zum Beladen oder Entladen des Transportaufbaus von dem Fahrgestell.

Das Fahrgestell ist so ausgebildet, dass eine Richtung der Verschiebung des Transportaufbaus lateral zur Längsachse des Fahrgestells liegt.

Ein vierter Aspekt der Erfindung bezieht sich auf ein Verfahren zum Verschieben eines Transportaufbaus in einem Fahrzeugkonfigurator. Der Fahrzeugkonfigurator umfasst ein Fahrgestell, einen Transportaufbau und ein oder
mehrere Transfermittel. Das eine oder die mehreren Transfermittel sind im Wesentlichen in einer Verschiebungsebene angeordnet, beziehungsweise bilden eine Verschiebungsebene. Das Verfahren umfasst den Schritt, dass der Transportaufbau mit dem einen oder der mehreren Transfermitteln in der Verschiebungsebene verschoben wird, zum Beladen und Entladen des Transportaufbaus von dem Fahrgestell.

Ein weiteres vorteilhaftes Verfahren bezieht sich auf einen Fahrzeugkonfigurator mit einer Station, umfassend den Schritt, dass der Transportaufbau zwischen dem Fahrgestell und der Station verschoben wird.

Ein weiteres vorteilhaftes Verfahren kann ausserdem die Schritte umfassen, die Station und das Fahrwerk im Wesentlichen horizontal auszurichten, insbesondere mittels einer höhenverstellbarer Auflagefläche des Fahrgestells und/oder der Station.

Die in der Beschreibung beschriebenen Ausführungsformen und Merkmale sind hiermit auch in ihrer Kombination offenbart. Weitere vorteilhafte Ausführungsformen werden im Folgenden beschrieben.

### Kurze Beschreibung der Zeichnungen

Weitere Ausgestaltungen, Vorteile und Anwendungen der Erfindung ergeben sich aus den abhängigen Ansprüchen und aus der nun folgenden Beschreibung anhand der Figuren. Dabei zeigen:
Fig. 1a und 1b zeigen jeweils einen Fahrzeugkonfigurator gemäss unterschiedlicher Ausführungsformen der Erfindung;
Fig. 2 zeigt einen Fahrzeugkonfigurator gemäss einer weiteren Ausführungsform der Erfindung;
Fig. 3 zeigt einen schematischen Querschnitt von einer Draufsicht des Fahrzeugkonfigurators nach einer Ausführungsform der Erfindung;
Fig. 4 zeigt einen Transportaufbau auf einer Station gemäss einer weiteren Ausführungsform der Erfindung;
Fig. 5 zeigt einen Transportaufbau auf einer Station gemäss einer weiteren Ausführungsform der Erfindung;
Fig. 6 zeigt einen Fahrzeugkonfigurator gemäss einer weiteren Ausführungsform der Erfindung.
Fig. 7 zeigt Befestigungsmittel zum Befestigen des Transportaufbaus auf dem Fahrgestell.
Fig. 8 zeigt einen Fahrzeugkonfigurator gemäss einer weiteren Ausführungsform der Erfindung.

### Weg(e) zur Ausführung der Erfindung

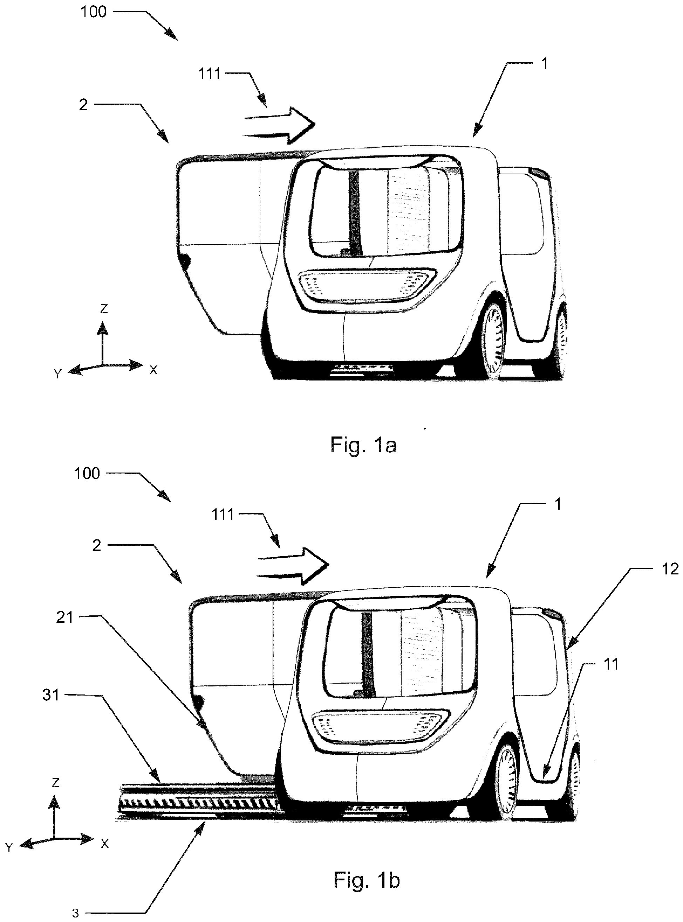

Fig. 1a zeigt schematisch eine Ausführungsform eines Fahrzeugkonfigurators 100 umfassend ein Fahrgestell 1 und einen Transportaufbau 2. Im Weiteren umfasst der Fahrzeugkonfigurator 100 eines oder mehrere Transfermittel, welche in der Abbildung nicht sichtbar sind, welche aber an dem Fahrgestell 1 oder dem Transportaufbau 2 angebracht sein können. Die einen oder mehrere Transfermittel sind im Wesentlichen in einer virtuellen Verschiebungsebene angeordnet. Der Transportaufbau 2 ist in dieser Verschiebungsebene verschiebbar, zum Beladen und Entladen des Transportaufbaus 2 von dem Fahrgestell 1.

Fig. 1b zeigt schematisch eine weitere Ausführungsform eines Fahrzeugkonfigurators 100 umfassend ein Fahrgestell 1, einen Transportaufbau 2 und zusätzlich eine Station 3. Im Weiteren umfasst der Fahrzeugkonfigurator 100 mehrere Transfermittel, welche in der Abbildung nicht sichtbar sind, welche aber an der Station 3, dem Fahrgestell 1 oder dem Transportaufbau 2 angebracht sein können. Das Fahrgestell 1 und die Station 3 können jeweils mit einer Auflagefläche 11, 31 für den Transportaufbau 2 ausgestaltet sein. Die einen oder mehrere Transfermittel sind im Wesentlichen in einer virtuellen Verschiebungsebene angeordnet. Der Transportaufbau 2 ist in dieser Verschiebungsebene zwischen Fahrgestell 1 und Station 2 verschiebbar, zum Beladen und Entladen des Transportaufbaus 2 von dem Fahrgestell 1.

Die Station 2 kann fest verankert sein oder kann beweglich sein.

Der Fahrzeugkonfigurator 100 ist vorzugsweise derart ausgebildet, dass die Auflagefläche 11 des Fahrgestells 1 und die Auflagefläche 31 der Station 3 im Wesentlichen eben ausgerichtet sind, also im Wesentlichen auf gleicher Höhe (in Z-Richtung) angeordnet sind.

Die Richtung der Verschiebung des Transportaufbaus 2 ist vorzugsweise lateral (in X-Richtung) zur Längsachse des Fahrgestells 1 (in Y-Richtung), wie durch den abgebildeten Pfeil 111 angedeutet.

Ausserdem können das Fahrgestell 1 und/oder die Station 2 jeweils eine Aufnahme für den Transportaufbau 2 umfassen, welche Aufnahme insbesondere passgenau ist für den Transportaufbau 2. In Fig. 1 ist eine solche Aufnahme 12 des Fahrgestells 1 abgebildet. Diese ist passgenau zu dem Transportaufbau 2 ausgebildet, das heisst, dass insbesondere die abgerundeten Ecken 21 des Transportaufbaus 2 genau in die Aufnahme 12 des Fahrgestells 1 passen.

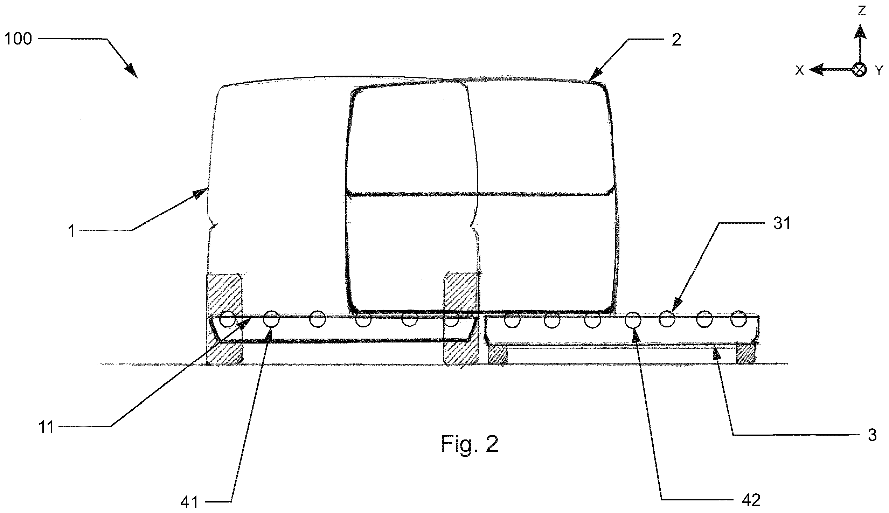

Fig. 2 zeigt einen Querschnitt eines Fahrzeugkonfigurator 100 nach einer weiteren Ausführungsform der Erfindung umfassend ein Fahrgestell 1, einen Transportaufbau 2 und eine Station 3. Im Weiteren umfasst der Fahrzeugkonfigurator 100 mehrere Transfermittel 41, 42 zum Verschieben des Transportaufbaus 2. Die Transfermittel 41, 42 dieser Ausführungsform sind als Rollen, bzw. Rollenlager, der Station 3 und des Fahrgestells 1 ausgebildet, welche den Transportaufbau 2 zwischen Station 3 und Fahrgestell 1 hin- und her bewegen. Die Transfermittel 41, 42 könnten auch als Lager aus Kugeln, als Förderband, Rollen, Transportbänder, Kettentransportsystem oder als gleitende Ebene ausgebildet sein.

Das Fahrgestell 1 und die Station 3 können jeweils mit einer Auflagefläche 11, 31 für den Transportaufbau 2 ausgestaltet sein. Der Fahrzeugkonfigurator 100 ist dann derart ausgebildet, dass die Auflagefläche 11 des Fahrgestells 1 und die Auflagefläche 31 der Station 3 im Wesentlichen eben ausgerichtet sind, also im Wesentlichen auf gleicher Höhe (in Z-Richtung) angeordnet sind. Der Transportaufbau 2 wäre dann mit den Transfermitteln 41, 42 zwischen der Auflagefläche 13 des Fahrgestells 1 und der Auflagefläche 31 der Station 3 verschiebbar.

Die Richtung der Verschiebung des Transportaufbaus 2 ist vorteilhafterweise lateral (in X-Richtung) zur Längsachse des Fahrgestells 1 (in Y-Richtung).

Transfermittel 41, 42 sind in der in Fig. 2 gezeigten Ausführungsform als Komponenten des Fahrgestells 1 und der Station 3 ausgebildet. Sie können aber auch nur Komponenten der Station 3 oder des Fahrgestells 1 sein, oder könnten auch an der Unterseite des Transportaufbaus 2 ausgebildet sein.

Damit das Fahrgestell 1 und die Station 3 im Wesentlichen eben ausgerichtet sind, kann die Station 3 und/oder das Fahrgestell 1 höhenverstellbar gegenüber dem Boden, auf welchem sie stehen, sein. Dies gilt für alle Ausführungsformen.

Das Fahrgestell 1 und/oder die Station 3 können eine Kabelverbindung oder eine kabellose Verbindung zu dem Transportaufbau haben, zur Strom- und Datenversorgung.

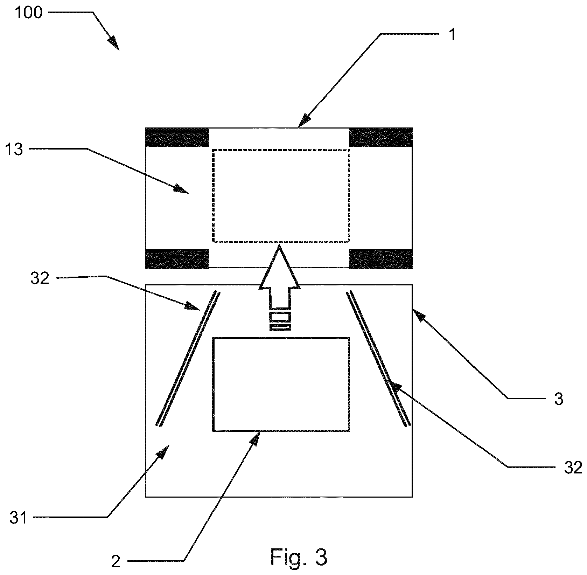

Fig. 3 zeigt eine schematische Draufsicht eines Querschnitts einer weiteren Ausführungsform des Fahrzeugkonfigurators 100 aus Fig. 1 oder Fig. 2. Zusätzlich zu den oben beschriebenen Merkmalen des Fahrzeugkonfigurators 100 umfasst die Station 3 dieser Ausführungsform eine Führungsvorrichtung 32, zur Führung des Transportaufbaus 2 während dem Verschieben, insbesondere auf einer Auflagefläche 31 der Station 3. Die Führungsvorrichtung 32 ist dabei derart ausgestaltet, dass sie den Transportaufbau 2 in Richtung des Fahrgestells 1 leitet. Insbesondere kann die Führungsvorrichtung 32 als Schwellen ausgebildet sein, welche eine seitliche Bewegung des Transportaufbaus 3, rechtwinklig zur Richtung der Verschiebung des Transportaufbaus 2, verhindern. Insbesondere können die Schwellen dazu trichterförmig in Richtung des Fahrgestelles 2 angeordnet sein.

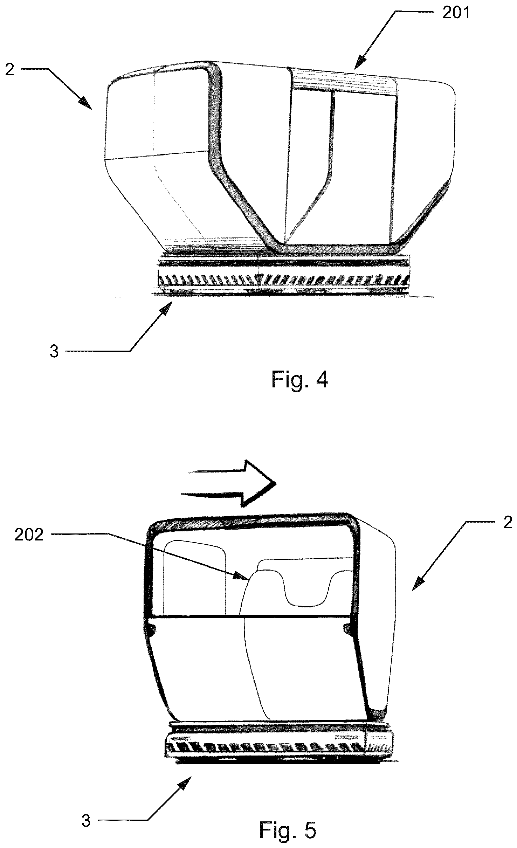

Der Fahrzeugkonfigurator 100 nach einer der Ausführungsformen wie in den Fig. 1 bis 3 gezeigt kann in einer weiteren Ausführungsform auch mehrere Transportaufbauten 2 umfassen. Ausführungsformen dieser weiteren Transportaufbauten 2 sind in Fig. 3 und Fig. 4 schematisch dargestellt und werden im Folgenden erläutert.

Fig. 4 zeigt eine Ausführungsform eines Transportaufbaus 2, welche insbesondere für Gütertransporte ausgebildet ist. Dazu sind seitlich Schiebetüren 201 angebracht, welche zum Beladen und Entladen des Transportaufbaus 2 verwendet werden können.

Fig. 5 zeigt eine weitere Ausführungsform eines Transportaufbaus 2, welcher insbesondere zum Personentransport ausgebildet ist. Dazu umfasst dieser Transportaufbau 2 Stühle 202 für die Passagiere.

Insbesondere kann der Fahrzeugkonfigurator 100 ein Set von unterschiedlichen Transportaufbauten 2 umfassen, welche je nach Bedarf mit dem einen oder mehreren Transfermittel verschiebbar sind.

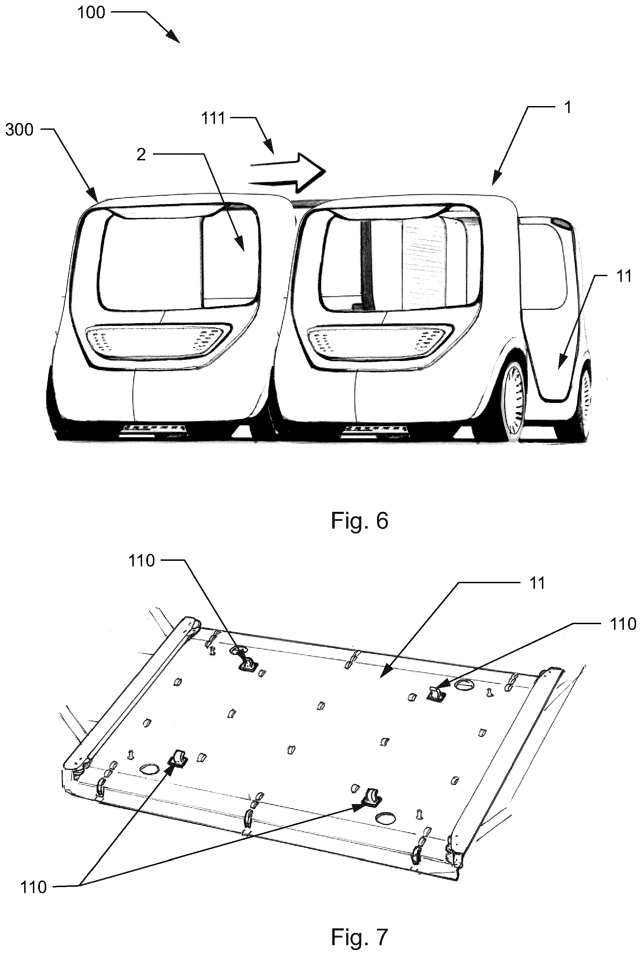

Fig. 6 zeigt eine weitere Ausführungsform des Fahrzeugkonfigurators, wobei der Konfigurator ein weiteres Fahrgestell 300 umfasst. Diese Ausführungsform ist derart ausgebildet, dass der Transportaufbau 2 zwischen dem Fahrgestell 1 und dem weiteren Fahrgestell 300 verschiebbar ist.

Fig. 7 zeigt eine Ausführungsform des Fahrgestells, welches Befestigungsmittel 110 zum Befestigen des Transportaufbaus 2 umfasst. Das Fahrgestell 1 kann mit einer Auflagefläche 11 ausgebildet sein. In einer vorteilhaften Ausführungsform sind auf der Auflagefläche 11 Befestigungsmittel 110 angeordnet, insbesondere vier Befestigungsmittel, welche versenkbar sind. Versenkbar heisst, dass die Befestigungsmittel 110 derart in der Auflagefläche 11 versenkbar sind, dass sie den Verschiebevorgang des Transportaufbaus 2 nicht behindern. In weiteren Ausführungsformen kann das Befestigungsmittel 110 auch verschiebbar, abdrehbar oder abkippbar sein.

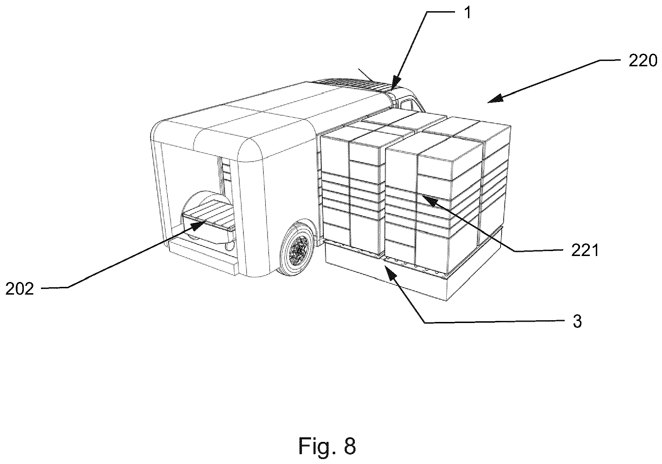

Fig. 8 zeigt eine weitere Ausführungsform des Fahrzeugkonfigurators 100 mit einem Fahrgestell 1 und zwei Transportaufbauten 220, 202 und Transfermittel 41. Der erste Transportaufbau 220 umfasst Transportmodule 221, welche miteinander verbunden oder teilweise miteinander verbunden sein können. Die Transportmodule 221 sind von unterschiedlicher Grösse, beziehungsweise unterschiedlichem Volumen. Sie bilden zusammen den ersten Transportaufbau 220 aus.

Wie in Fig. 8 abgebildet kann das Fahrgestell 1 insbesondere einen zweiten Transportaufbau 202 umfassen. Hier ist dieser zweite Transportaufbau 202 als Transportwagen ausgebildet. Dieser Transportwagen dient insbesondere dem Transport von Transportmodulen 221, zum Beispiel falls keine Station vorhanden ist oder um die Transportmodule 221 zur Station zu bringen.

Fig. 1a bildet ausserdem das Verfahren zum Verschieben eines Transportaufbaus 2 in einem Fahrzeugkonfigurator 100 ab, welches mit dem Pfeil 111 in der Verschiebungsrichtung angedeutet wird.

Fig. 1b zeigt eine weitere Ausführungsform dieses Verfahrens mit einem Fahrzeugkonfigurator, welcher auch eine Station 3 umfasst. Auch hier deutet der Pfeil 111 die Verschiebungsrichtung an.

Während in der vorliegenden Anmeldung bevorzugte Ausführungen der Erfindung beschrieben sind, ist klar darauf hinzuweisen, dass die Erfindung nicht auf diese beschränkt ist und auch in anderer Weise innerhalb des Umfangs der folgenden Ansprüche ausgeführt werden kann.

## Patentansprüche

1. Fahrzeugkonfigurator (100) aufweisend
- ein Fahrgestell (1),
- mindestens einen Transportaufbau (2),
- ein oder mehrere Transfermittel (41), wobei das eine oder die mehreren Transfermittel im Wesentlichen in einer Verschiebungsebene angeordnet sind,
wobei der Fahrzeugkonfigurator (100) derart ausgebildet ist,
dass der Transportaufbau (2) mit dem einen oder der mehreren Transfermittel (41) in der Verschiebungsebene verschiebbar ist, zum Beladen oder Entladen des Transportaufbaus (2) von dem Fahrgestell (1);
wobei die Richtung der Verschiebung des Transportaufbaus (2) lateral zur Längsachse des Fahrgestells (1) liegt;
**dadurch gekennzeichnet, dass**
das Fahrgestell (1) eine Führungsvorrichtung (32) umfasst, womit der Transportaufbau (2) während dem Verschieben geführt werden kann;
wobei der Fahrzeugkonfigurator (100) als Konfigurator für Fahrzeuge im öffentlichen Verkehr geeignet ist.

2. Der Fahrzeugkonfigurator (100) nach Anspruch 1, umfassend eine Station (3), wobei der Fahrzeugkonfigurator (100) derart ausgebildet ist, dass der Transportaufbau (2) zwischen dem Fahrgestell (1) und der Station (3) verschiebbar ist.

3. Der Fahrzeugkonfigurator (100) nach einem der vorangehenden Ansprüche, aufweisend ein weiteres Fahrgestell (300), wobei der Fahrzeugkonfigurator (100) derart ausgebildet ist, dass der Transportaufbau (2) zwischen dem Fahrgestell (1) und dem weiteren Fahrgestell (300) verschiebbar ist.

4. Der Fahrzeugkonfigurator (100) nach einem der vorangehenden Ansprüche, wobei das Fahrgestell (1) und/oder das weitere Fahrgestell (300) und/oder die Station (3) jeweils eine Aufnahme für den Transportaufbau (2) aufweisen, welche Aufnahme jeweils passgenau für den Transportaufbau (2) ist.

5. Der Fahrzeugkonfigurator (100) nach einem der vorangehenden Ansprüche, wobei das eine oder die mehreren Transfermittel (41, 42) als Komponenten des Fahrgestells (1) und/oder als Komponenten des weiteren Fahrgestells (300) und/oder als Komponenten des Transportaufbaus (2) und/oder als Komponenten der Station (3) ausgebildet sind.

6. Der Fahrzeugkonfigurator (100) nach einem der vorangehenden Ansprüche, wobei das eine oder die mehreren Transfermittel (41, 42) zumindest teilweise als Lager mit Rädern, Rollen oder Kugeln, als Förderband, als Transportband, als Kettentransportsystem oder als gleitende Ebene, oder Kombinationen davon ausgebildet sind.

7. Der Fahrzeugkonfigurator (100) nach einem der vorangehenden Ansprüche, wobei das Fahrgestell (1) und/oder das weitere Fahrgestell (300) und/oder die Station höhenverstellbar sind.

8. Der Fahrzeugkonfigurator (100) nach einem der vorangehenden Ansprüche aufweisend ein Set von Transport aufbauten (2), vorzugsweise aufweisend mindestens einen Transportaufbau (2) zum Personentransport und einen Transportaufbau (2) zum Gütertransport.

9. Fahrzeugkonfigurator (100) nach einem der vorangehenden Ansprüche, wobei der Transportaufbau mittels mindestens eines insbesondere verschiebbaren, versenkbaren oder drehbaren Befestigungsmittels (110) auf dem Fahrgestell (1) befestigt wird.

10. Der Fahrzeugkonfigurator (100) nach einem der vorangehenden Ansprüche aufweisend eine Verbindung zwischen dem Fahrgestell (1) und dem Transportaufbau (2), zum Austauschen von Daten und/oder zur Stromversorgung.

11. Fahrgestell (1) aufweisend ein oder mehrere Transfermittel (41), welche im Wesentlichen in einer Verschiebungsebene angeordnet sind,
wobei das Fahrgestell derart ausgebildet ist,
dass ein Transportaufbau (2) mit dem einen oder den mehreren Transfermitteln (41) in der Verschiebungsebene verschiebbar ist, zum Beladen oder Entladen des Transportaufbaus (2) von dem Fahrgestell (1);
**dadurch gekennzeichnet, dass** das Fahrgestell weiter derart ausgebildet ist,
dass die Richtung der Verschiebung des Transportaufbaus (2) lateral zur Längsachse des Fahrgestells (1) liegt;
wobei das Fahrgestell (1) eine Führungsvorrichtung (32) umfasst, womit der Transportaufbau (2) während dem Verschieben geführt werden kann;
wobei das Fahrgestell für Fahrzeuge im öffentlichen Verkehr geeignet ist.

12. Verfahren zum Verschieben eines Transportaufbaus (2) in einem Fahrzeugkonfigurator (100) aufweisend
- ein Fahrgestell (1),
- einen Transportaufbau (2) und
- ein oder mehrere Transfermittel (41), wobei das eine oder die mehreren Transfermittel (41) im Wesentlichen in einer Verschiebungsebene angeordnet sind, beziehungsweise eine Verschiebungsebene bilden, aufweisend den Schritt
- Verschieben des Transportaufbaus (2) mit dem einen oder der mehreren Transfermitteln (41, 42) in der Verschiebungsebene, zum Beladen oder Entladen des Transportaufbaus (2) von dem Fahrgestell (1);
wobei die Richtung der Verschiebung des Transportaufbaus (2) lateral zur Längsachse des Fahrgestells (1) liegt;
wobei das Fahrgestell (1) eine Führungsvorrichtung (32) umfasst, womit der Transportaufbau (2) während dem Verschieben geführt werden kann;
**dadurch gekennzeichnet, dass**
der Fahrzeugkonfigurator (100) als Konfigurator für Fahrzeuge im öffentlichen Verkehr geeignet ist.

## Claims

1. A vehicle configurator (100) comprising
- a chassis (1),
- at least one transport structure (2),
- one or more transfer means (41), the one or more transfer means being arranged substantially in a displacement plane,
wherein the vehicle configurator (100) is designed in such a way that the transport structure (2) is displaceable in the displacement plane by the one or more transfer means (41) for loading or unloading the transport structure (2) from the chassis (1);
wherein the direction of displacement of the transport structure (2) is lateral to the longitudinal axis of the chassis (1);
**characterized in that**
the chassis (1) comprises a guiding device (32) with which the transport structure (2) can be guided during displacement;
wherein the vehicle configurator (100) is suitable as a configurator for vehicles in public transportation.

2. The vehicle configurator (100) according to claim 1, comprising a station (3), wherein the vehicle configurator (100) is designed in such a way that the transport structure (2) is displaceable between the chassis (1) and the station (3).

3. The vehicle configurator (100) according to one of the preceding claims, comprising a further chassis (300), wherein the vehicle configurator (100) is designed in such a way that the transport structure (2) is displaceable between the chassis (1) and the further chassis (300).

4. The vehicle configurator (100) according to one of the preceding claims, wherein the chassis (1) and/or the further chassis (300) and/or the station (3) each have a receptacle for the transport structure (2), which receptacle is in each case custom-fit for the transport structure (2).

5. The vehicle configurator (100) according to one of the preceding claims, wherein the one or more transfer means (41, 42) are designed as components of the chassis (1) and/or as components of the further chassis (300) and/or as components of the transport structure (2) and/or as components of the station (3).

6. The vehicle configurator (100) according to any one of the preceding claims, wherein the one or more transfer means (41, 42) are at least partially formed as a bearing with wheels, rollers or balls, as a conveyor, as a conveying belt, as a chain transport system or as a sliding plane, or combinations thereof.

7. The vehicle configurator (100) according to one of the preceding claims, wherein the chassis (1) and/or the further chassis (300) and/or the station are height-adjustable.

8. The vehicle configurator (100) according to one of the preceding claims, comprising a set of transport structures (2), preferably comprising at least one transport structure (2) for transporting persons and one transport structure (2) for transporting goods.

9. The vehicle configurator (100) according to one of the preceding claims, wherein the transport structure is fastened to the chassis (1) by means of at least one fastening means (110) which is in particular displaceable, retractable or rotatable.

10. The vehicle configurator (100) according to one of the preceding claims, comprising a connection between the chassis (1) and the transport structure (2), for exchanging data and/or for supplying power.

11. A chassis (1) having one or more transfer means (41) which are arranged substantially in a displacement plane,
wherein the chassis is designed in such a way,
that a transport structure (2) is displaceable in the displacement plane by the one or more transfer means (41) for loading or unloading the transport structure (2) from the chassis (1);
**characterized in that**
the chassis is further designed in such a way,
that the direction of displacement of the transport structure (2) is lateral to the longitudinal axis of the chassis (1);
wherein the chassis (1) comprises a guiding device (32) with which the transport structure (2) can be guided during displacement;
wherein the chassis is suitable for vehicles in public transportation.

12. A method for displacing a transport structure (2) in a vehicle configurator (100), comprising
- a chassis (1),
- a transport structure (2) and
- one or more transfer means (41), the one or more transfer means being arranged substantially in a displacement plane or forming a displacement plane, comprising the step of
- displacing the transport structure (2) in the displacement plane by the one or more transfer means (41, 41) for loading or unloading the transport structure (2) from the chassis (1);
wherein the direction of displacement of the transport structure (2) is lateral to the longitudinal axis of the chassis (1);
wherein the chassis (1) comprises a guiding device (32) with which the transport structure (2) can be guided during displacement;
**characterized in that**
the vehicle configurator (100) is suitable as a configurator for vehicles in public transportation.

## Revendications

1. Configurateur de véhicule (100) comprenant
- un châssis (1);
- au moins une structure de transport (2);
- un ou plusieurs moyens de transfert (41), le ou les moyens de transfert étant disposés sensiblement dans un plan de déplacement,
le configurateur de véhicule (100) étant conçu de telle sorte que la structure de transport (2) est déplaçable dans le plan de déplacement par le ou les moyens de transfert (41), pour charger la structure de transport (2) sur le châssis (1) ou la décharger de celui-ci;
dans lequel la direction du déplacement de la structure de transport (2) est latérale à l'axe longitudinal du châssis (1),
**caractérisé par le fait que** le châssis (1) comporte un dispositif de guidage (32) avec lequel la structure de transport (2) peut être guidée pendant le déplacement, le configurateur de véhicule (100) étant approprié en tant que configurateur pour des véhicules dans le transport public.

2. Configurateur de véhicule (100) selon la revendication 1, comportant une station (3), le configurateur de véhicule (100) étant conçu de telle sorte que la structure de transport (2) est déplaçable entre le châssis (1) et la station (3).

3. Configurateur de véhicule (100) selon l'une des revendications précédentes, présentant un autre châssis (300), le configurateur de véhicule (100) étant conçu de telle sorte que la structure de transport (2) est déplaçable entre le châssis (1) et l'autre châssis (300).

4. Configurateur de véhicule (100) selon l'une des revendications précédentes, dans lequel le châssis (1) et/ou l'autre châssis (300) et/ou la station (3) présentent chacun un logement pour la structure de transport (2), lequel logement est à chaque fois adapté avec précision à la structure de transport (2).

5. Configurateur de véhicule (100) selon l'une des revendications précédentes, dans lequel le ou les moyens de transfert (41, 42) sont conçus comme composants du châssis (1) et/ou comme composants de l'autre châssis (300) et/ou comme composants de la structure de transport (2) et/ou comme composants de la station (3).

6. Configurateur de véhicule (100) selon l'une des revendications précédentes, dans lequel le ou les moyens de transfert (41, 42) sont au moins partiellement conçus comme paliers à roues, rouleaux ou billes, comme courroie transporteuse, comme bande de transport, comme système de transport à chaînes ou comme plan de glissement, ou des combinaisons de ceux-ci.

7. Configurateur de véhicule (100) selon l'une des revendications précédentes, dans lequel le châssis (1) et/ou l'autre châssis (300) et/ou la station sont réglables en hauteur.

8. Configurateur de véhicule (100) selon l'une des revendications précédentes, présentant un ensemble de structures de transport (2), présentant de préférence au moins une structure de transport (2) pour le transport de personnes et une structure de transport (2) pour le transport de marchandises.

9. Configurateur de véhicule (100) selon l'une des revendications précédentes, dans lequel la structure de transport est fixée sur le châssis (1) par au moins un moyen de fixation (110), en particulier coulissant, escamotable ou rotatif.

10. Configurateur de véhicule (100) selon l'une des revendications précédentes, présentant une liaison entre le châssis (1) et la structure de transport (2), pour l'échange de données et/ou pour l'alimentation électrique.

11. Châssis (1) présentant un ou plusieurs moyens de transfert (41), lesquels sont disposés sensiblement dans un plan de déplacement,
dans lequel le châssis est conçu de telle sorte qu'une structure de transport (2) est déplaçable dans le plan de déplacement par le ou les moyens de transfert (41), pour charger la structure de transport (2) sur le châssis (1) ou la décharger de celui-ci;
**caractérisé par le fait que** le châssis est en outre conçu de telle sorte que la direction du déplacement de la structure de transport (2) est latérale à l'axe longitudinal du châssis (1);
le châssis (1) comportant un dispositif de guidage (32) avec lequel la structure de transport (2) peut être guidée pendant le déplacement;
le châssis étant approprié pour des véhicules dans le transport public.

12. Procédé pour déplacer une structure de transport (2) dans un configurateur de véhicule (100) présentant
- un châssis (1);
- une structure de transport (2); et
- un ou plusieurs moyens de transfert (41), le ou les moyens de transfert (41) étant disposés sensiblement dans un plan de déplacement ou formant un plan de déplacement,
présentant l'étape consistant à:
- déplacer la structure de transport (2) dans le plan de déplacement par le ou les moyens de transfert (41, 42), pour charger la structure de transport (2) sur le châssis (1) ou la décharger de celui-ci;
dans lequel la direction de déplacement de la structure de transport (2) est latérale à l'axe longitudinal du châssis (1);
dans lequel le châssis (1) comporte un dispositif de guidage (32) avec lequel la structure de transport (2) peut être guidée pendant le déplacement,
**caractérisé par le fait que** le configurateur de véhicule (100) est approprié en tant que configurateur pour des véhicules dans le transport public.
